# EUROPÄISCHE PATENTSCHRIFT

(11) **EP 3 889 485 B1**
(45) Veröffentlichungstag und Bekanntmachung des Hinweises auf die Patenterteilung: **08.01.2025**
(21) Anmeldenummer: 21165996.6
(22) Anmeldetag: 30.03.2021
(51) Int. Cl.: F16L 27/11, F16L 27/10, B64C 1/14, B64D 11/02

(54) **ABWASSERTANKANORDNUNG FÜR EIN FLUGZEUG**
WASTE WATER ASSEMBLY FOR AN AIRCRAFT
AGENCEMENT DE RÉSERVOIR D'EAUX USÉES POUR UN AÉRONEF

(30) Priorität: 31.03.2020 DE 102020108936
(43) Veröffentlichungstag der Anmeldung: 06.10.2021
(73) Patentinhaber: Airbus Operations GmbH, 21129 Hamburg (DE)
(72) Erfinder:
(74) Vertreter: Bird & Bird LLP - Hamburg

(56) Entgegenhaltungen:
- EP-A1- 1 439 122
- EP-A1- 2 570 709
- EP-A2- 2 447 520
- DE-A1- 102004 042 147
- US-A- 3 574 354
- US-A- 3 704 034
- US-A- 4 436 326

## Beschreibung

Die vorliegende Erfindung betrifft eine Abwassertankanordnung für ein Flugzeug, insbesondere für eine Flugzeugtoilette. Weitere Aspekte der Erfindung betreffen eine Toleranzausgleichsvorrichtung für eine solche Abwassertankanordnung, ein zweites Rohrstück für solch eine Toleranzausgleichsvorrichtung sowie ein Flugzeug mir einer solchen Abwassertankanordnung oder einer solchen Toleranzausgleichsvorrichtung.

Die Abwassertankanordnung umfasst einen Abwassertank und ein Ablaufrohr. Das Ablaufrohr ist starr oder vorzugsweise flexibel, beispielsweise in Form eines Schlauchs, ausgebildet und dient dazu, den Abwassertank zu entleeren. Das Ablaufrohr hat ein erstes Ende und ein gegenüberliegendes zweites Ende, wobei das Ablaufrohr mit seinem ersten Ende an dem Abwassertank befestigt ist und mit seinem zweiten Ende zur Verbindung mit einem Service-Panel, d.h. einer Wartungstafel, in der Flugzeugstruktur, insbesondere in der Außenhaut, vorgesehen ist. An dem Service-Panel kann dann beispielsweise ein Abwasserfahrzeug oder -wagen positioniert werden, in das bzw. den das Abwasser aus dem Abwassertank durch das Ablaufrohr entleert werden kann. Auch das Ventil zum Entleeren des Abwassertanks kann durch einen Hebel an dem Service-Panel betätigt werden.

Zwischen dem Abwassertank und dem Service-Panel können größere Toleranzen auftreten, die sich normalerweise zusammensetzen aus Fertigungstoleranzen, Einbautoleranzen und Toleranzen aus Verformungen der Flugzeugstruktur durch Belastung während des Betriebs, z.B. durch Flugmanöver. Einbau- und Fertigungstoleranzen können durch geeignete Maßnahmen während der Erstinstallation ausgeglichen werden. Die durch Verformung entstehenden Toleranzen müssen durch bewegliche Bauteile ausgeglichen werden, beispielsweise durch Verwendung eines flexiblen Ablaufrohrs. Ein solches flexibles Ablaufrohr kann je mehr Toleranzen ausgleichen, je länger es ist. Da jedoch konstruktiv bedingt sowie um Platz und Gewicht zu sparen ein möglichst kurzes Ablaufrohr häufig bevorzugt ist, ist es oft nicht oder nicht sinnvoll möglich, mehr als die durch Verformung entstehenden Toleranzen durch ein flexibles Ablaufrohr auszugleichen. Daher ist es grundsätzlich wünschenswert, wenn die Einbau- und Fertigungstoleranzen bereits durch geeignete Mittel während der Erstinstallation ausgeglichen werden können.

Aus der DE 10 2004 042147 A1 ist eine Abwassertankanordnung gemäß dem Oberbegriff des Anspruchs 1 bekannt. Aus der EP 2 570 709 A1 sind ein erstes und ein zweites Rohrstück bekannt, die über einen Flansch des ersten Rohrstücks, der in einem radialen Spalt des zweiten Rohrstücks gelagert ist, verbunden sind. Aus der US 3 574 354 A sind ein erstes und ein zweites Rohrstück bekannt, die über einen Faltenbalg verbunden sind.

Die Aufgabe der vorliegenden Erfindung ist es, eine Abwassertankanordnung bereitzustellen, welche Toleranzen zwischen dem Abwassertank und dem Service-Panel wirksam ausgleichen kann, insbesondere Einbau- und Fertigungstoleranzen im Rahmen der Erstinstallation wirksam ausgleichen kann.

Diese Aufgabe wird durch eine Tolerenzausgleichsvorrichtung gemäß Anspruch 1 gelöst. Auf diese Weise können Einbau- und Fertigungstoleranzen zwischen dem Abwassertank und dem Service-Panel bereits im Rahmen der Erstinstallation effektiv ausgeglichen werden, ohne dass hierfür die Flexibilität des Ablaufrohrs in Anspruch genommen werden müsste.

Die Erfindung schlägt auch vor, eine Abwassertankanordnung gemäß Anspruch 2. Weitere optionale Merkmale der beanspruchten Erfindung sind im Ansprüche 3-6 beschrieben. Die Toleranzausgleichsvorrichtung umfasst ein erstes Rohrstück und ein zweites Rohrstück, beide vorzugsweise mit rundem, insbesondere kreisförmigem Querschnitt. Das erste Rohrstück und das zweite Rohrstück sind entlang einer Längsachse hintereinander angeordnet, so dass Abwasser die beiden Rohrstücke nacheinander durchströmen kann. Die Längsachse ist dabei vorzugsweise die Mittelachse oder Symmetrieachse des ersten Rohrstücks. Dabei ist das zweite Rohrstück gegenüber dem ersten Rohrstück senkrecht zur Längsachse beweglich, so dass Toleranzen senkrecht zur Längsachse ausgeglichen werden können. Dies gilt zumindest für die Montage bzw. Erstinstallation. Nachdem die Einbau- und Fertigungstoleranzen bei der Montage durch die Toleranzausgleichsvorrichtung ausgeglichen wurden, kann die Toleranzausgleichsvorrichtung festgestellt werden, beispielsweise durch Festziehen von Schrauben oder durch Verquetschen aneinander anliegende Teile, so dass eine Bewegung des zweiten Rohrstücks gegenüber dem ersten Rohrstück nicht mehr möglich ist. Alternativ kann die Toleranzausgleichsvorrichtung jedoch auch so eingesetzt werden, dass das zweite Rohrstück gegenüber dem ersten Rohrstück auch während des Betriebes beweglich ist.

Dabei ist es besonders bevorzugt, wenn das erste Rohrstück gegenüber dem zweiten Rohrstück zweidimensional in einer Ebene senkrecht zur Längsachse beweglich ist, d.h. in sämtliche Richtungen senkrecht zur Längsachse beweglich ist. Auf diese Weise können Toleranzen in der gesamten Ebene senkrecht zur Längsachse ausgeglichen werden. Alternativ ist es auch möglich, dass das erste Rohrstück gegenüber dem zweiten Rohrstück nur in einzelne aber nicht alle Richtungen senkrecht zur Längsachse beweglich ist.

Dabei ist es ferner bevorzugt, wenn das erste Rohrstück eingerichtet ist, um vorzugsweise starr mit dem Service-Panel verbunden zu werden, und das zweite Rohrstück starr oder beweglich mit dem zweiten Ende des Ablaufrohrs verbunden ist oder zur Verbindung mit diesem eingerichtet ist. Beispielsweise kann das zweite Ende des Ablaufrohrs in einen Trichter des zweiten Rohrstücks ragen, ohne fest mit diesem verbunden zu sein. Dies erlaubt eine große Bewegungsfreiheit der beiden Teile gegenüber einander und erleichtert die Montage.

Erfindungsgemäß weist das erste Rohrstück einen sich senkrecht zur Längsachse erstreckenden, nach innen offenen und vorzugsweise in Umfangsrichtung umlaufenden Spalt auf. Das zweite Rohrstück weist einen sich senkrecht zur Längsachse nach außen erstreckenden, insbesondere nach außen abstehenden, und vorzugsweise in Umfangsrichtung umlaufenden Flansch, insbesondere einen T-Flansch, auf. Das erste Rohrstück und das zweite Rohrstück sind derart miteinander verbunden, dass der Flansch in dem Spalt angeordnet ist, so dass eine Bewegung des zweiten Rohrstücks gegenüber dem ersten Rohrstück, insbesondere senkrecht zur Längsachse, im Rahmen des Spalts möglich ist. Auf diese Weise ist eine besonders einfache und wirksame Toleranzausgleichsvorrichtung gebildet.

Dabei ist es auch erfindungsgemäß, wenn der Flansch in dem Spalt mit Spiel angeordnet ist, so dass der Flansch senkrecht zur Längsachse in dem Spalt beweglich ist und dadurch das zweite Rohrstück gegenüber dem ersten Rohrstück senkrecht zur Längsachse beweglich ist. Die Menge an Spiel kann in allen Richtungen gleich sein, kann jedoch auch in unterschiedlichen Richtungen unterschiedlich sein, beispielsweise im Falle einer exzentrischen Form des Spalts. Auf diese Weise kann des zweite Rohrstück gegenüber dem ersten Rohrstück vorzugsweise sowohl um die Längsachse verdreht als auch senkrecht zur Längsachse verschoben werden.

In einer nicht beanspruchten Ausführungsform weist das zweite Rohrstück eine exzentrische Form auf, wodurch bei einem Verdrehen des zweiten Rohrstücks gegenüber dem ersten Rohrstück um die Längsachse das zweite Rohrstück in einer Ebene senkrecht zur Längsachse gegenüber dem ersten Rohrstück beweglich ist. Auf diese Weise kann durch ein Verdrehen des zweiten Rohrstücks gegenüber dem ersten Rohrstück um die Längsachse eine Bewegung des zweiten Rohrstücks, insbesondere des zweiten Endes des zweiten Rohrstücks, in einer Ebene senkrecht zur Längsachse und damit ein Toleranzausgleich in dieser Ebene erfolgen.

Dabei ist es besonders bevorzugt, jedoch nicht von den Ansprüchen umfasst, wenn das zweite Rohrstück ein erstes Ende und ein gegenüberliegendes zweites Ende sowie einen zwischen dem ersten und zweiten Ende liegenden ersten Kanal aufweist. Das erste Ende ist konzentrisch drehbar um die Längsachse mit dem ersten Rohrstück verbunden und der erste Kanal verläuft schräg gegenüber der Längsachse, so dass das zweite Ende exzentrisch zur Längsachse angeordnet ist. D.h., der Rohrquerschnitt am zweiten Ende ist exzentrisch zur Längsachse, insbesondere senkrecht zur Längsachse versetzt gegenüber dem Rohrquerschnitt am ersten Ende angeordnet, so dass die Mittelachse des zweiten Endes vorzugsweise parallel beabstandet ist von der Mittelachse des ersten Endes bzw. von der Längsachse. Auf diese Weise ist eine einfache exzentrische Form des zweiten Rohrstücks gebildet, wobei durch Drehen des zweiten Rohrstücks relativ zum ersten Rohrstück um die Längsachse die Position des zweiten Endes des zweiten Rohrstücks in einer Ebene senkrecht zur Längsachse angepasst werden und somit ein Toleranzausgleich erfolgen kann.

Dabei ist es weiter bevorzugt, jedoch nicht von den Ansprüchen umfasst, wenn der erste Kanal trichterförmig mit einer Querschnittsverjüngung zum ersten Ende des zweiten Rohrstücks hin ausgebildet ist. Eine solche Trichterform des Kanals ermöglichst eine Beweglichkeit des Ablaufrohrs gegenüber dem zweiten Rohrstück, insbesondere des zweiten Endes des Ablaufrohrs gegenüber dem zweiten Ende des zweiten Rohrstücks, da das zweite Ende des Ablaufrohrs mit Spiel in dem Trichter des zweiten Endes des zweiten Rohrstücks angeordnet sein kann.

Dabei ist es bevorzugt, jedoch nicht von den Ansprüchen umfasst, wenn das zweite Ende des zweiten Rohrstücks mit dem zweiten Ende des Ablaufrohrs verbunden ist oder zur Verbindung mit diesem eingerichtet ist. Auf diese Weise ist eine besonders einfache und wirksame Bauweise ermöglicht.

Alternativ ist es bevorzugt, jedoch nicht von den Ansprüchen umfasst, wenn die Toleranzausgleichsvorrichtung ein drittes Rohrstück umfasst, das ein erstes Ende und ein gegenüberliegendes zweites Ende sowie einen zwischen dem ersten und zweiten Ende liegenden zweiten Kanal aufweist. Das erste Ende des dritten Rohrstücks ist drehbar, vorzugsweise exzentrisch zur Längsachse und konzentrisch zur Mittelachse des zweiten Endes des zweiten Rohrstücks drehbar, vorzugsweise um eine Achse parallel versetzt zur Längsachse, mit dem zweiten Ende des zweiten Rohrstücks verbunden oder zur Verbindung mit diesem eingerichtet. Das zweite Ende des dritten Rohrstücks ist vorzugsweise mit dem zweiten Ende des Ablaufrohrs verbunden ist oder zur Verbindung mit diesem eingerichtet. Mit einem solchen dritten Rohrstück wird eine sehr weitreichende und genaue Bewegung des zweiten Endes des dritten Rohrstücks senkrecht zur Längsachse gegenüber dem ersten Rohrstück und damit ein sehr weitreichender und genauer Toleranzausgleich ermöglicht.

Dabei ist es besonders bevorzugt, jedoch nicht von den Ansprüchen umfasst, wenn der zweite Kanal schräg gegenüber der Längsachse verläuft, so dass das zweite Ende des dritten Rohrstücks exzentrisch zum zweiten Ende des zweiten Rohrstücks, insbesondere zur Mittelachse des zweiten Endes des zweiten Rohrstücks, sowie zum ersten Ende des dritten Rohrstücks angeordnet ist. D.h., der Rohrquerschnitt am zweiten Ende des dritten Rohrstück ist exzentrisch zur Mittelachse des zweiten Endes des zweiten Rohrstücks und des ersten Endes des dritten Rohrstücks, insbesondere senkrecht zur Längsachse versetzt gegenüber dem Rohrquerschnitt am ersten Ende des dritten Rohrstücks, angeordnet, so dass die Mittelachse des zweiten Endes des dritten Rohrstücks vorzugsweise parallel beabstandet ist von der Mittelachse des ersten Endes des dritten Rohrstücks und des zweiten Endes des zweiten Rohrstücks. Mit einem solchen exzentrischen dritten Rohrstück kann eine noch weitreichendere und genauere Bewegung des zweiten Endes des dritten Rohrstücks senkrecht zur Längsachse gegenüber dem ersten Rohrstück und damit ein noch weitreichenderer und genauerer Toleranzausgleich ermöglicht werden.

Ferner ist es besonders bevorzugt, jedoch nicht von den Ansprüchen umfasst, wenn der zweite Kanal trichterförmig mit einer Querschnittsverjüngung zum ersten Ende des dritten Rohrstücks hin ausgebildet ist. Vorzugsweise ist die Trichterform des zweiten Kanals derart gebildet, dass bestimmten Drehstellungen des dritten Rohrstücks gegenüber dem zweiten Rohrstück, insbesondere in den Extremstellungen, in denen der erste Kanal und der zweite Kanal fluchten, d.h. in die gleiche Richtung verlaufen, die Steigung des Trichters des dritten Rohrstücks am Übergang zum zweiten Rohrstück in die Steigung des Trichters des zweiten Rohrstücks übergeht, so dass ein stetiger Übergang ohne Knick zwischen dem ersten Kanal und den zweiten Kanal gebildet ist. Auf diese Weise kann durch das zweite und dritte Rohrstück ein gemeinsamer Trichter gebildet werden, so dass eine weitgehende Beweglichkeit des Ablaufrohrs gegenüber dem dritten Rohrstück, insbesondere des zweiten Endes des Ablaufrohrs gegenüber dem zweiten Ende des dritten Rohrstücks ermöglicht wird, da das zweite Ende des Ablaufrohrs mit Spiel in dem Trichter des zweiten Endes des dritten Rohrstücks angeordnet sein kann.

Erfindungsgemäß ist das zweite Rohrstück flexibel, d.h. beweglich oder verformbar, ausgebildet. Insbesondere hat das zweite Rohrstück eine flexible Form oder ist aus einem flexiblen Material gebildet. Vorzugsweise ist das zweite Rohrstück flexibel bezüglich seiner axialen Richtung, d.h. entlang der Längsachse, und/oder bezüglich seiner radialen Richtung und/oder bezüglich Verdrehungen um die Längsachse und/oder um eine oder mehrere Querachsen senkrecht zur Längsachse. Auf diese Weise können durch das zweite Rohrstück insbesondere diejenigen Toleranzen ausgeglichen werden, die sich aus der Verformungen der Flugzeugstruktur während des Fluges ergeben. Wenn das zweite Rohrstück diese Verformungstoleranzen ausgleichen kann, ist es nicht erforderlich, dass diese durch das Ablaufrohr ausgeglichen werden, so dass das Ablaufrohr vorzugsweise sehr kurz und wahlweise auch starr ausgebildet sein kann.

Dabei ist es auch erfindungsgemäß, wenn das zweite Rohrstück als Faltenbalg ausgebildet ist. Vorzugsweise weist der Faltenbalg entlang der Längsachse betrachtet mindestens eine Falte, vorzugsweise mehrere Falten, auf, die senkrecht zur Längsachse nach innen und/oder außen hervorsteht und vorzugsweise in Umfangsrichtung umläuft. Mit einem solchen Faltenbalg kann das zweite Rohrstück besonders wirksam flexibel ausgebildet werden, da durch die Falten des Faltenbalgs Bewegungen bzw. Verformungen des zweiten Rohrstücks sowohl in axialer Richtung als auch in radialer Richtung ermöglicht werden, ohne dass eine nennenswerte Zugdehnung des Materials des zweiten Rohrstücks notwendig wäre. Damit werden auch keine Lasten über den Faltenbalg hinweg übertragen, vor allem keine Lasten in Richtung der Längsachse zwischen dem Service-Panel bzw. der Flugzeugstruktur und dem Abwassertank. Auch Verdrehungen in alle Richtungen werden durch den Faltenbalg bis zu einem bestimmten Maß ermöglicht. Ferner toleriert der Faltenbalg aufgrund seiner faltigen Form ein hohes Maß sowohl an Überdruck als auch an Unterdruck in seinem Inneren, ohne dabei nennenswert verformt oder überlastet zu werden.

Dabei ist es ferner bevorzugt, wenn das zweite Rohrstück vollständig oder teilweise aus einem Gummi-Material gebildet ist. Ein solches Gummi-Material ist zum einen elastisch dehnbar, wodurch die Flexibilität des zweiten Rohrstücks erreicht bzw. erhöht wird. Zum anderen bildet das Gummi-Material eine Isolierung gegen Kälte ins Innere des Flugzeugs sowie eine elektrische Isolierung beispielsweise gegen Blitzeinschlag.

Dabei ist es ferner bevorzugt, wenn das Festklemmen des Flanschs in dem Spalt dadurch erfolgt, dass eine obere Scheibe oberhalb des Spalts gegen eine untere Scheibe unterhalb des Spalts gepresst wird, wobei der Flansch zwischen der oberen Scheibe und der unteren Scheibe angeordnet ist. Das Pressen und Fixieren der oberen Scheibe und der unteren Scheibe gegenüber einander erfolgt vorzugsweise durch einen Klemmring, der von radial außen mit der oberen und der unteren Scheibe eingreift. Zur weiteren Abdichtung sind vorzugsweise an der Oberfläche der oberen und/oder der unteren Scheibe ein oder mehrere umlaufende Ringwulste ausgebildet, die den Flansch punktuell noch stärker quetschen und dadurch abdichten. Mit dem Ablaufrohr kann das zweite Rohrstück vorzugsweise über einen Anschlussflansch verbunden sein, der sich parallel zur Längsachse von der Außenseite des Ablaufrohrs nach unten erstreckt und gegen den das zweite Ende des zweiten Rohrstücks beispielsweise mittels eines Spannrings gepresst und dadurch befestigt ist. Das Ablaufrohr kann sich dabei vorzugsweise mit seinem zweiten Ende trichterförmig in die obere Öffnung am zweiten Ende des zweiten Rohrstücks hinein erstrecken und an seinem ersten Ende über ein Ventil mit dem Abwassertank verbunden sein. Das Ablaufrohr kann dabei vorzugsweise sehr kurz und/oder starr, beispielsweise aus Metall, ausgebildet sein, was zu einer kompakten Bauweise führt.

Ein weiterer Aspekt, der jedoch nicht von den Ansprüchen umfasst ist, betrifft ein zweites Rohrstück für eine Toleranzausgleichsvorrichtung nach einer der zuvor beschriebenen Ausführungsformen. Die zuvor im Zusammenhang mit der Toleranzausgleichsvorrichtung erläuterten Merkmale und Wirkungen sind vis-a-vis ebenfalls bei dem zweiten Rohrstück anwendbar und bevorzugt.

In einer bevorzugten Ausführungsform, die nicht von den Ansprüchen umfasst ist, weist das zweite Rohrstück ein erstes Ende und ein gegenüberliegendes zweites Ende sowie einen zwischen dem ersten und zweiten Ende liegenden ersten Kanal auf. Vorzugsweise weist das zweite Rohrstück einen sich am ersten Ende senkrecht zur Längsachse nach außen erstreckenden Flansch. Vorzugsweise ist das zweite Rohrstück ferner als Faltenbalg ausgebildet, der entlang der Längsachse betrachtet mindestens eine Falte, vorzugsweise mehrere Falten, aufweist, die senkrecht zur Längsachse nach innen oder außen hervorsteht. Die weiter oben im Zusammenhang mit der Toleranzausgleichsvorrichtung erläuterten Merkmale und Wirkungen des Faltenbalgs sind vis-a-vis ebenfalls bei dem hier erläuterten zweiten Rohrstück anwendbar und bevorzugt.

Noch ein weiterer Aspekt der vorliegenden Erfindung betrifft ein Flugzeug, insbesondere mit einer Flugzeugtoilette, mit einer Abwassertankanordnung nach einer der zuvor beschriebenen Ausführungsformen oder mit einer Toleranzausgleichsvorrichtung nach einer der zuvor beschriebenen Ausführungsformen. Die zuvor im Zusammenhang mit der Abwassertankanordnung und der Toleranzausgleichsvorrichtung erläuterten Merkmale und Wirkungen sind vis-a-vis ebenfalls bei dem Flugzeug anwendbar und bevorzugt.

Bevorzugte Ausführungsformen der vorliegenden Erfindung werden im Folgenden anhand einer Zeichnung näher erläutert. Die Zeichnung zeigt in
- Fig. 1: ein Flugzeug gemäß einer Ausführungsform der Erfindung,
- Fig. 2: eine Abwassertankanordnung gemäß einer Ausführungsform der Erfindung,
- Fig. 3: eine Toleranzausgleichsvorrichtung gemäß einem ersten nicht beanspruchten Ausführungsbeispiel, wobei erstes und zweites Rohrstück konzentrisch angeordnet sind,
- Fig. 4: die Toleranzausgleichsvorrichtung aus Fig. 3, wobei erstes und zweites Rohrstück exzentrisch angeordnet sind,
- Fig. 5: eine Toleranzausgleichsvorrichtung gemäß einem zweiten nicht beanspruchten Ausführungsbeispiel, das nicht von den Ansprüchen umfasst ist, wobei erstes und zweites Rohrstück in extrem rechter Position angeordnet sind,
- Fig. 6: die Toleranzausgleichsvorrichtung aus Fig. 5, wobei erstes und zweites Rohrstück in neutraler Position angeordnet sind,
- Fig. 7: die Toleranzausgleichsvorrichtung aus Fig. 5, wobei erstes und zweites Rohrstück in extrem linker Position angeordnet sind,
- Fig. 8: eine Querschnittsansicht einer Toleranzausgleichsvorrichtung gemäß einem dritten Ausführungsbeispiel der beanspruchten Erfindung und
- Fig. 9: eine Detailansicht des Faltenbalgs der Toleranzausgleichsvorrichtung aus Fig. 8.

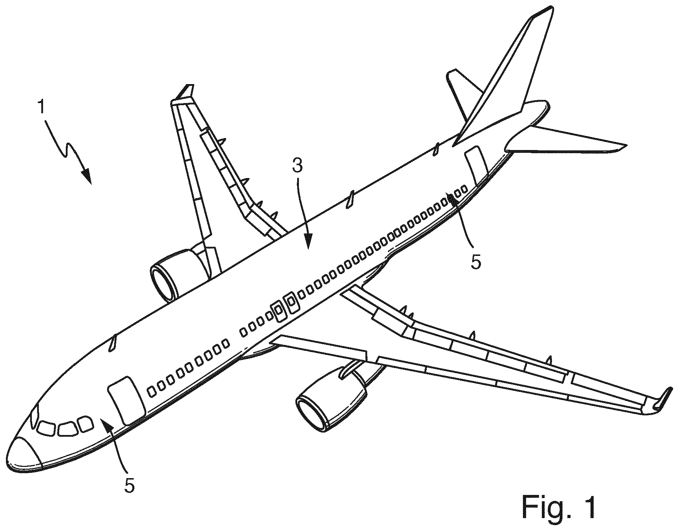

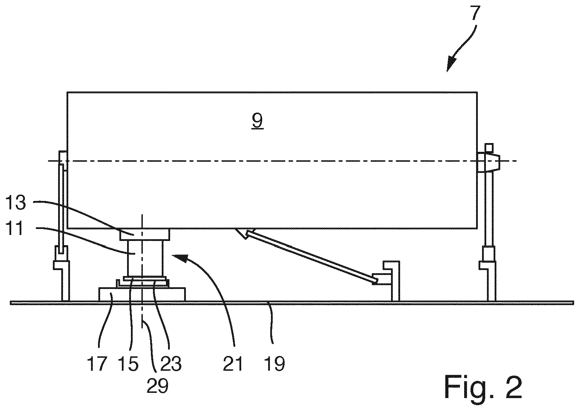

In Fig. 1 ist ein Flugzeug 1 dargestellt, welches in dessen Innenraum 3 eine nicht erkennbare Flugzeugtoilette 5 aufweist. Die Flugzeugtoilette 5 weist eine erfindungsgemäße Abwassertankanordnung 7 auf, die in Fig. 2 genauer dargestellt ist.

Wie in Fig. 2 gezeigt, umfasst die Abwassertankanordnung 7 einen Abwassertank 9 und ein Ablaufrohr 11 zum Entleeren des Abwassertanks 9. Das Ablaufrohr 11 ist flexibel in Form eines Schlauchs ausgebildet und hat ein erstes Ende 13 und ein gegenüberliegendes zweites Ende 15, wobei das Ablaufrohr 11 mit seinem ersten Ende 13 an dem Abwassertank 9 angeschlossen ist und mit seinem zweiten Ende 15 an einem Service-Panel 17 angeschlossen ist, das in einer Außenhaut 19 des Flugzeugs 1 vorgesehen ist und an dem durch Öffnen eines Ventils 21 Abwasser aus dem Abwassertank 9 durch das Ablaufrohr 11 entleert werden kann.

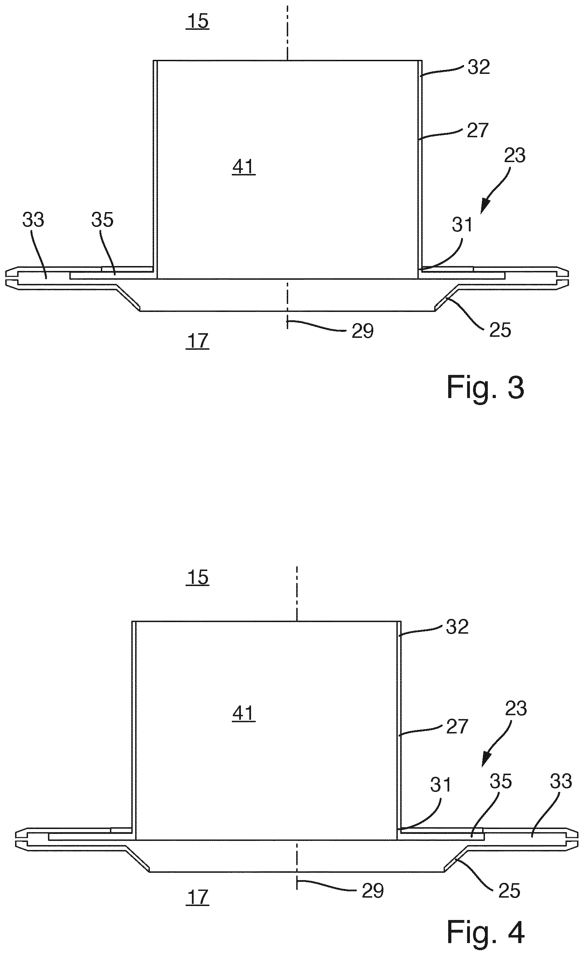

Die Abwassertankanordnung 7 weist ferner eine Toleranzausgleichsvorrichtung 23 auf, die das zweite Ende 15 des Ablaufrohrs 11 mit dem Service-Panel 17 verbindet und Toleranzen zwischen dem zweiten Ende 15 des Ablaufrohrs 11 und dem Service-Panel 17 in einer Ebene senkrecht zur Erstreckung des Ablaufrohrs 11 und parallel zur Außenhaut 19 ausgleicht. Drei bevorzugte Ausführungsbeispiele der Toleranzausgleichsvorrichtung 23 sind in den Fig. 3 bis 9 dargestellt. Eine Abwassertankanordnung und ein Flugzeug mit den ersten und zweiten Toleranzausgleichsvorrichtung sind nicht Teil der beanspruchten Erfindung.

Die Toleranzausgleichsvorrichtung 23 aller drei Ausführungsbeispiele umfasst ein erstes Rohrstück 25 und ein zweites Rohrstück 27 mit kreisförmigem Querschnitt. Das erste Rohrstück 25 und das zweite Rohrstück 27 sind entlang einer Längsachse 29 hintereinander angeordnet, so dass Abwasser die beiden Rohrstücke 25, 27 nacheinander durchströmen kann. Die Längsachse 29 ist dabei die Mittelachse des ersten Rohrstücks 25. Dabei ist das zweite Rohrstück 27 gegenüber dem ersten Rohrstück 25 in einer Ebene senkrecht zur Längsachse 29 beweglich, so dass Toleranzen senkrecht zur Längsachse 29 ausgeglichen werden können. Dies gilt in den vorliegenden Ausführungsbeispielen für die Montage bzw. Erstinstallation. Nachdem die Einbau- und Fertigungstoleranzen bei der Montage durch die Toleranzausgleichsvorrichtung 23 ausgeglichen wurden, wird die Toleranzausgleichsvorrichtung 23 fixiert, so dass eine Bewegung des zweiten Rohrstücks 27 gegenüber dem ersten Rohrstück 25 nicht mehr möglich ist.

In dem in Fign. 3 und 4 gezeigten Ausführungsbeispiel ist das erste Rohrstück 25 starr mit dem Service-Panel 17 verbunden und das zweite Rohrstück 27 ist mit dem zweiten Ende 15 des Ablaufrohrs 11 verbunden. Dabei ragt das zweite Ende 15 des Ablaufrohrs 11 mit etwas Spiel in das dem Ablaufrohr 11 zugewandten Ende des zweite Rohrstücks 27 hinein, ohne jedoch fest mit diesem verbunden zu sein.

Das erste Rohrstück 25 weist einen sich senkrecht zur Längsachse 29 erstreckenden, nach innen offenen und in Umfangsrichtung umlaufenden Spalt 33 auf. Das zweite Rohrstück 27 weist einen senkrecht zur Längsachse 29 nach außen abstehenden und in Umfangsrichtung umlaufenden Flansch 35 auf. Das erste Rohrstück 25 und das zweite Rohrstück 27 sind derart miteinander verbunden, dass der Flansch 35 in dem Spalt 33 angeordnet ist, so dass eine Bewegung des zweiten Rohrstücks 27 gegenüber dem ersten Rohrstück 25 senkrecht zur Längsachse 29 im Rahmen des Spalts 33 möglich ist. Dabei ist der Flansch 35 in dem Spalt 33 mit Spiel angeordnet, so dass der Flansch 35 senkrecht zur Längsachse 29 in dem Spalt 33 beweglich ist und dadurch das zweite Rohrstück 27 gegenüber dem ersten Rohrstück 25 senkrecht zur Längsachse 29 beweglich ist, beispielsweise zwischen einer konzentrischen Stellung (siehe Fig. 3) und einer exzentrischen Stellung (siehe Fig. 4).

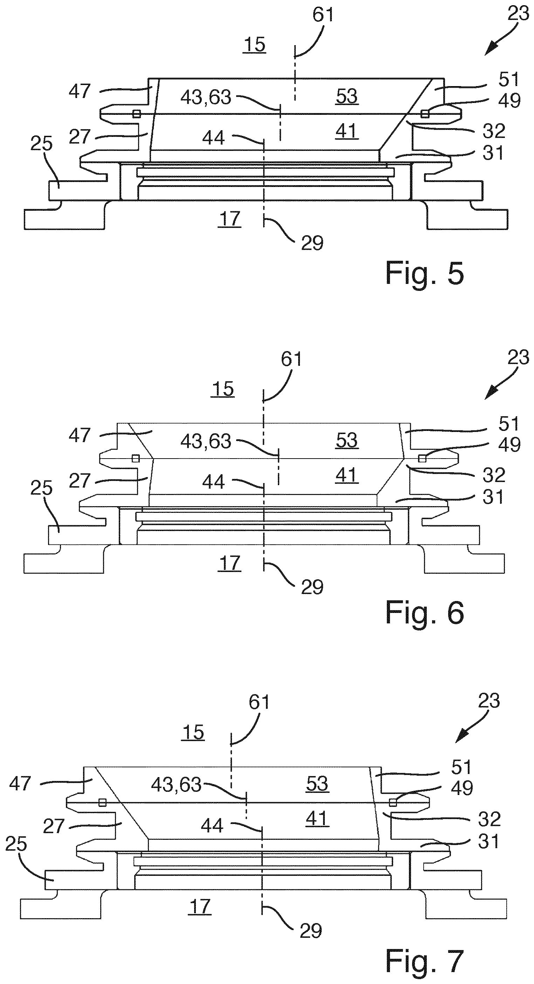

In dem in Fign. 5 bis 7 gezeigten Ausführungsbeispiel, das nicht von den Ansprüchen umfasst ist, weist das zweite Rohrstück 27 eine exzentrische Form auf, wodurch bei einem Verdrehen des zweiten Rohrstücks 27 gegenüber dem ersten Rohrstück 25 um die Längsachse 29 das zweite Rohrstück 27 in der Ebene senkrecht zur Längsachse 29 gegenüber dem ersten Rohrstück 25 beweglich ist und dadurch ein Toleranzausgleich in dieser Ebene erfolgen kann.

Das zweite Rohrstück 27 weist ein erstes Ende 31 und ein gegenüberliegendes zweites Ende 32 sowie einen zwischen dem ersten und zweiten Ende 31, 32 liegenden ersten Kanal 41 auf. Das erste Ende 31 ist konzentrisch drehbar um die Längsachse 29 mit dem ersten Rohrstück 25 verbunden und der erste Kanal 41 verläuft schräg gegenüber der Längsachse 29, so dass das zweite Ende 32 exzentrisch zur Längsachse 29 angeordnet ist. Dabei ist der Rohrquerschnitt am zweiten Ende 32 exzentrisch zur Längsachse 29, d.h. senkrecht zur Längsachse 29 versetzt gegenüber dem Rohrquerschnitt am ersten Ende 31 angeordnet, so dass die Mittelachse 43 des zweiten Endes 32 parallel beabstandet ist von der Mittelachse 44 des ersten Endes 31 und von der Längsachse 29. Der erste Kanal 41 ist trichterförmig mit einer Querschnittsverjüngung zum ersten Ende 31 des zweiten Rohrstücks 27 hin ausgebildet.

Die Toleranzausgleichsvorrichtung 23 umfasst ein drittes Rohrstück 47, das ein erstes Ende 49 und ein gegenüberliegendes zweites Ende 51 sowie einen zwischen dem ersten und zweiten Ende 49, 51 liegenden zweiten Kanal 53 aufweist. Das erste Ende 49 des dritten Rohrstücks 47 ist exzentrisch zur Längsachse 29 und konzentrisch zur Mittelachse 43 des zweiten Endes 32 des zweiten Rohrstücks 27 drehbar um eine Achse parallel versetzt zur Längsachse 29 mit dem zweiten Ende 32 des zweiten Rohrstücks 27 verbunden. Das zweite Ende 51 des dritten Rohrstücks 47 ist mit dem zweiten Ende 15 des Ablaufrohrs 11 verbunden.

Der zweite Kanal 53 verläuft schräg gegenüber der Längsachse 29, so dass das zweite Ende 51 des dritten Rohrstücks 47 exzentrisch zum zweiten Ende 32 des zweiten Rohrstücks 27 sowie zum ersten Ende 49 des dritten Rohrstücks 47 angeordnet ist. Dabei ist der Rohrquerschnitt des zweiten Endes 51 des dritten Rohrstück 47 senkrecht zur Längsachse 29 versetzt gegenüber dem Rohrquerschnitt des ersten Endes 49 des dritten Rohrstücks 47 und des zweiten Endes 32 des zweiten Rohrstücks 27 angeordnet, so dass die Mittelachse 61 des zweiten Endes 51 des dritten Rohrstücks 47 parallel beabstandet ist von der Mittelachse 63 des ersten Endes 49 des dritten Rohrstücks 47 und des zweiten Endes 32 des zweiten Rohrstücks 27.

Ferner ist der zweite Kanal 53 trichterförmig mit einer Querschnittsverjüngung zum ersten Ende 49 des dritten Rohrstücks 47 hin ausgebildet ist. Die Trichterform des zweiten Kanals 53 ist derart gebildet, dass in bestimmten Drehstellungen des dritten Rohrstücks 47 gegenüber dem zweiten Rohrstück 27, beispielsweise in den Extremstellungen extrem rechts (siehe Fig. 5) und extrem links (siehe Fig. 7), in denen der erste Kanal 41 und der zweite Kanal 53 fluchten und in die gleiche Richtung verlaufen, die Steigung des Trichters des dritten Rohrstücks 47 am Übergang zum zweiten Rohrstück 27 in die Steigung des Trichters des zweiten Rohrstücks 27 übergeht, so dass ein stetiger Übergang ohne Knick zwischen dem ersten Kanal 41 und dem zweiten Kanal 53 gebildet ist und durch das zweite 27 und dritte Rohrstück 47 ein gemeinsamer Trichter zur Aufnahme des zweiten Endes 15 des Ablaufrohrs 11 gebildet wird. Das erste, zweite und dritte Rohrstück 25, 27, 47 können jedoch auch gegenüber einander in eine neutrale Drehstellung (siehe Fig. 6) gebracht werden, in der der Rohrquerschnitt des zweiten Endes 51 des dritten Rohrstücks 47 konzentrisch mit dem Rohrquerschnitt des ersten Rohrstücks 25 angeordnet ist, d.h. die Mittelachse 61 des zweiten Endes 51 des dritten Rohrstücks 47 koaxial verläuft mit der Längsachse 29. Dabei kann die Mittelachse 43 des zweiten Endes 32 des zweiten Rohrstücks 27 und die Mittelachse 63 des ersten Endes 49 des dritten Rohrstücks 47 exzentrisch, d.h. parallel verschoben zu der Mittelachse 61 des zweiten Endes 51 des dritten Rohrstücks 47 und zur Längsachse 29 sein, wie in Fig. 6 erkennbar ist.

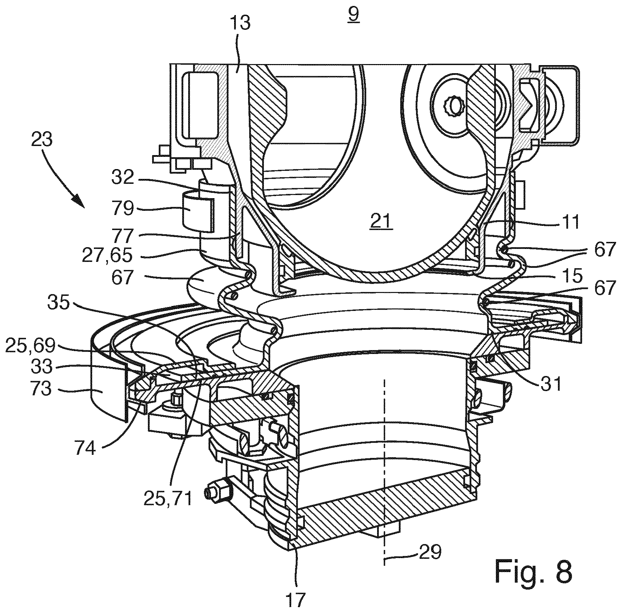

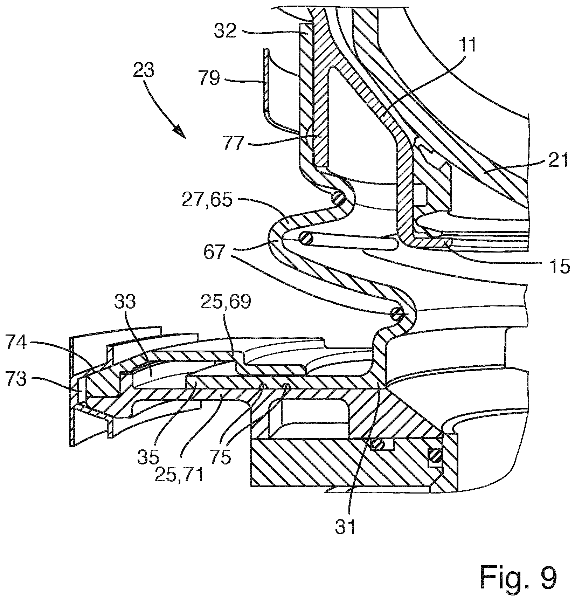

Das in den Fign. 8 und 9 gezeigte Ausführungsbeispiel unterscheidet sich von dem in den Fig. 3 und 4 gezeigten Ausführungsbeispiel vor allem dadurch, dass das zweite Rohrstück 27 flexibel ausgebildet ist. Dabei hat das zweite Rohrstück 27 sowohl eine flexible Form als auch ist es aus einem flexiblen Material gebildet. Das zweite Rohrstück ist nämlich als Faltenbalg 65 ausgebildet, der entlang der Längsachse 29 betrachtet mehrere nach innen und außen hervorstehende und in Umfangsrichtung umlaufende Falten 67 aufweist. Außerdem ist das zweite Rohrstück 27 vollständig oder teilweise aus einem Gummi-Material gebildet, was nicht nur eine elastische Verformbarkeit, sondern auch eine Isolierung gegen Kälte und elektrische Ladung bewirkt. Damit ist das zweite Rohrstück 27 flexibel sowohl in axialer Richtung, als auch in radialen Richtung als auch bezüglich Verdrehungen um die Längsachse 29 und um zwei Querachsen orthogonal zur Längsachse 29. Wie bei der Ausführungsform aus Fign. 3 und 4 weist das zweite Rohrstück 27 an seinem ersten Ende 31 einen umlaufenden und nach außen ragenden Flansch 35 auf, der mit Spiel in einen umlaufenden und nach innen offenen Spalt 33 des ersten Rohrstücks 25 ragt, so dass eine Bewegung des Flanschs 35 in dem Spalt 33 und damit eine Bewegung des zweiten Rohrstücks 27 gegenüber dem ersten Rohrstück 25 senkrecht zur Längsachse 29 zum Ausgleich von Einbau- und Fertigungstoleranzen während der Montage ermöglicht ist.

Nachdem die Einbau- und Fertigungstoleranzen bei der Montage durch die Toleranzausgleichsvorrichtung 23 wie zuvor beschrieben ausgeglichen wurden, kann die Toleranzausgleichsvorrichtung 23 fixiert werden, was im vorliegenden Ausführungsbeispiel durch Festklemmen des Flanschs 35 in dem Spalt 33 erfolgen kann, so dass eine Bewegung des Flanschs 35 innerhalb des Spalts 33 nicht mehr möglich ist und eine Bewegung des zweiten Rohrstücks 27 gegenüber dem ersten Rohrstück 25 nur noch durch elastisches Verformen des zweiten Rohrstücks 27 möglich ist. Das Festklemmen des Flanschs 35 in dem Spalt 33 kann im vorliegenden Ausführungsbeispiel dadurch erfolgen, dass eine obere Scheibe 69 des ersten Rohrstücks 25 oberhalb des Spalts 33 gegen eine untere Scheibe 71 des ersten Rohrstücks 25 unterhalb des Spalts 33 gepresst wird, wobei der Flansch 35 zwischen der oberen Scheibe 69 und der unteren Scheibe 71 angeordnet ist. Das Pressen und Fixieren der oberen Scheibe 69 und der unteren Scheibe 71 gegenüber einander kann durch einen Klemmring 73 erfolgen, der von radial außen mit der oberen und der unteren Scheibe 69, 71 eingreift. Zur Ausführung einer sicheren Verklemmung ist eine Aufnahme 74 des Klemmrings 73 zum Umfassen des jeweiligen Rands der oberen und unteren Scheibe 69, 71 V-förmig - eine sogenannte V-Schelle - vorgesehen. Die Ränder der Scheiben 69 und 71 sind dafür entsprechend der Aufnahme 74 konisch geformt. Zur weiteren Abdichtung sind in dem vorliegenden Ausführungsbeispiel an der Oberfläche der unteren Scheibe 71 zwei umlaufende Ringwulste 75 ausgebildet, die den Flansch 35 punktuell noch stärker quetschen und dadurch besonders abdichten.

Mit dem Ablaufrohr 11 ist das zweite Rohrstück 27 in dem vorliegenden Ausführungsbeispiel über einen Anschlussflansch 77 verbunden, der sich parallel zur Längsachse 29 von der Außenseite des Ablaufrohrs 11 nach unten erstreckt und gegen den das obere zweite Ende 32 des zweiten Rohrstücks 27 mittels eines Spannrings 79 gepresst und dadurch befestigt ist. Das Ablaufrohr 11 erstreckt sich dabei mit seinem unteren zweiten Ende 15 trichterförmig in die obere Öffnung am zweiten Ende 32 des zweiten Rohrstücks 27 hinein und ist an seinem oberen ersten Ende 13 über ein Ventil 21 mit dem Abwassertank 9 verbunden. Das Ablaufrohr 11 ist in der vorliegenden Ausführungsform sehr kurz und starr ausgebildet, was zu einer kompakten Bauweise führt.

Durch die Toleranzausgleichsvorrichtungen 23 der zuvor beschriebenen Ausführungsbeispiele können Einbau- und Fertigungstoleranzen zwischen dem Abwassertank 9 und dem Service-Panel 17 bereits im Rahmen der Erstinstallation effektiv ausgeglichen werden.

## Patentansprüche

1. Toleranzausgleichsvorrichtung (23) für eine Abwassertankanordnung (7) für ein Flugzeug (1) umfassend einen Abwassertank (9) und ein Ablaufrohr (11) mit einem ersten Ende (13) und einem gegenüberliegenden zweiten Ende (15), wobei das Ablaufrohr (11) mit seinem ersten Ende (13) an dem Abwassertank (9) befestigt ist und mit seinem zweiten Ende (15) zur Verbindung mit einem Service-Panel (17) in der Flugzeugstruktur vorgesehen ist, wobei die Toleranzausgleichsvorrichtung (23) eingerichtet ist, um das zweite Ende (15) des Ablaufrohrs (11 ) mit dem Service-Panel (17) zu verbinden und Toleranzen zwischen dem zweiten Ende (15) des Ablaufrohrs (11) und dem Service-Panel (17) auszugleichen, und umfasst: ein erstes Rohrstück (25) und ein zweites Rohrstück (27), wobei das erste Rohrstück (25) und das zweite Rohrstück (27) entlang einer Längsachse (29) hintereinander angeordnet sind, wobei das zweite Rohrstück (27) gegenüber dem ersten Rohrstück (25) senkrecht zur Längsachse (29) beweglich ist, wobei das erste Rohrstück (25) einen sich senkrecht zur Längsachse (29) erstreckenden, nach innen offenen und in Umfangsrichtung umlaufenden Spalt (33) aufweist, wobei das zweite Rohrstück (27) einen sich senkrecht zur Längsachse (29) nach außen erstreckenden Flansch (35) aufweist und wobei das erste und zweite Rohrstück (25 , 27) derart miteinander verbunden sind, dass der Flansch (35) in dem Spalt (33) angeordnet ist, wobei der Flansch (35) in dem Spalt (33) mit Spiel angeordnet ist, so dass zumindest zur Montage oder Erstinstallation der Flansch (35) senkrecht zur Längsachse (29) in dem Spalt (33) beweglich ist, **dadurch gekennzeichnet, dass** die Toleranzausgleichsvorrichtung eingerichtet ist, um festgestellt zu werden, nachdem die Einbau- und Fertigungstoleranzen bei der Montage durch die Toleranzausgleichsvorrichtung ausgeglichen wurden, so dass eine Bewegung des zweiten Rohrstücks gegenüber dem ersten Rohrstück nicht mehr möglich ist, und dass das zweite Rohrstück (27) als flexibler Faltenbalg (65) ausgebildet ist.

2. Abwassertankanordnung (7) für ein Flugzeug (1) umfassend einen Abwassertank (9) und ein Ablaufrohr (11) mit einem ersten Ende (13) und einem gegenüberliegenden zweiten Ende (15), wobei das Ablaufrohr (11) mit seinem ersten Ende (13) an dem Abwassertank (9) befestigt ist und mit seinem zweiten Ende (15) zur Verbindung mit einem Service-Panel (17) in der Flugzeugstruktur vorgesehen ist, wobei die Abwassertankanordnung (7) eine Toleranzausgleichsvorrichtung (23) nach Anspruch 1 aufweist.

3. Abwassertankanordnung (7 ) nach Anspruch 2, wobei das erste Rohrstück (25) gegenüber dem zweiten Rohrstück (27) zweidimensional in einer Ebene senkrecht zur Längsachse (29) beweglich ist.

4. Abwassertankanordnung (7) nach Anspruch 2 oder 3 , wobei das erste Rohrstück (25) eingerichtet ist, um mit dem Service-Panel (17) verbunden zu werden, und wobei das zweite Rohrstück (27) mit dem zweiten Ende (15) des Ablaufrohrs (11) verbunden ist.

5. Abwassertankanordnung (7) nach einem der Ansprüche 2 bis 4 , wobei das zweite Rohrstück (27) aus Gummi-Material gebildet ist.

6. Flugzeug (1 ) mit einer Abwassertankanordnung (7) nach einem der Ansprüche 2 bis 5 oder mit einer Toleranzausgleichsvorrichtung (23) nach Anspruch 1 .

## Claims

1. Tolerance compensation device (23) for a waste water tank arrangement (7) for an aircraft (1) comprising a waste water tank (9) and a drain pipe (11) having a first end (13) and an opposite second end (15), wherein the drain pipe (11) is fastened with its first end (13) to the waste water tank (9) and with its second end (15) is provided for connection to a service panel (17) in the aircraft structure, wherein the tolerance compensation device (23) is configured to connect the second end (15) of the drain pipe (11) to the service panel (17) and to compensate for tolerances between the second end (15) of the drain pipe (11) and the service panel (17), and comprises: a first pipe piece (25) and a second pipe piece (27), wherein the first pipe piece (25) and the second pipe piece (27) are arranged in a row along a longitudinal axis (29), wherein the second pipe piece (27) is movable relative to the first pipe piece (25) perpendicularly with respect to the longitudinal axis (29), wherein the first pipe piece (25) has a gap (33) which extends perpendicularly with respect to the longitudinal axis (29), is inwardly open and runs around circumferentially, wherein the second pipe piece (27) has a flange (35) extending outwards perpendicularly with respect to the longitudinal axis (29), and wherein the first and second pipe piece (25, 27) are connected to each other in such a way that the flange (35) is arranged in the gap (33), wherein the flange (35) is arranged in the gap (33) with play, with the result that, at least for assembly or initial installation, the flange (35) is movable in the gap (33) perpendicularly with respect to the longitudinal axis (29), **characterized in that** the tolerance compensation device is configured to be locked after the installation and manufacturing tolerances during assembly have been compensated by the tolerance compensation device, with the result that a movement of the second pipe piece relative to the first pipe piece is no longer possible, and **in that** the second pipe piece (27) is formed as a flexible bellows (65).

2. Waste water tank arrangement (7) for an aircraft (1) comprising a waste water tank (9) and a drain pipe (11) having a first end (13) and an opposite second end (15), wherein the drain pipe (11) is fastened with its first end (13) to the waste water tank (9) and with its second end (15) is provided for connection to a service panel (17) in the aircraft structure, wherein the waste water tank arrangement (7) has a tolerance compensation device (23) according to Claim 1.

3. Waste water tank arrangement (7) according to Claim 2, wherein the first pipe piece (25) is movable two-dimensionally in a plane perpendicularly with respect to the longitudinal axis (29) relative to the second pipe piece (27).

4. Waste water tank arrangement (7) according to Claim 2 or 3, wherein the first pipe piece (25) is configured to be connected to the service panel (17), and wherein the second pipe piece (27) is connected to the second end (15) of the drain pipe (11).

5. Waste water tank arrangement (7) according to one of Claims 2 to 4, wherein the second pipe piece (27) is formed from rubber material.

6. Aircraft (1) with a waste water tank arrangement (7) according to one of Claims 2 to 5 or with a tolerance compensation device (23) according to Claim 1.

## Revendications

1. Dispositif (23) de compensation de tolérances pour un ensemble (7) formant réservoir d'eaux usées pour un avion (1), comprenant un réservoir (9) d'eaux usées et un tuyau de vidange (11) ayant une première extrémité (13) et une deuxième extrémité (15) opposée, le tuyau de vidange (11) étant fixé par sa première extrémité (13) au réservoir (9) d'eaux usées et étant prévu pour être relié, par sa deuxième extrémité (15), à un panneau de service (17) dans la structure de l'avion, le dispositif (23) de compensation de tolérances étant adapté pour relier la deuxième extrémité (15) du tuyau de vidange (11) au panneau de service (17) et pour compenser les tolérances entre la deuxième extrémité (15) du tuyau de vidange (11) et le panneau de service (17), et comprend : une première pièce tubulaire (25) et une deuxième pièce tubulaire (27), la première pièce tubulaire (25) et la deuxième pièce tubulaire (27) étant agencées l'une derrière l'autre le long d'un axe longitudinal (29), la deuxième pièce tubulaire (27) étant mobile par rapport à la première pièce tubulaire (25) perpendiculairement à l'axe longitudinal (29), la première pièce tubulaire (25) présentant un espace (33) s'étendant perpendiculairement à l'axe longitudinal (29), ouvert vers l'intérieur et s'étendant dans la direction circonférentielle, la deuxième pièce tubulaire (27) présentant une bride (35) s'étendant vers l'extérieur perpendiculairement à l'axe longitudinal (29), et la première et la deuxième pièce tubulaire (25, 27) étant reliées entre elles de telle sorte que la bride (35) soit agencée dans l'espace (33), la bride (35) étant agencée dans l'espace (33) avec du jeu, de sorte qu'au moins pour le montage ou la première installation, la bride (35) soit mobile perpendiculairement à l'axe longitudinal (29) dans l'espace (33), **caractérisé en ce que** le dispositif de compensation de tolérances est agencé de façon à être immobilisé après que les tolérances de montage et de fabrication aient été compensées par le dispositif de compensation de tolérances lors du montage, de sorte qu'un mouvement de la deuxième pièce tubulaire par rapport à la première pièce tubulaire ne soit plus possible, et **en ce que** la deuxième pièce tubulaire (27) est conçue sous la forme d'un soufflet flexible (65).

2. Ensemble (7) formant réservoir d'eaux usées pour un aéronef (1) comprenant un réservoir (9) d'eaux usées et un tuyau de vidange (11) ayant une première extrémité (13) et une deuxième extrémité (15) opposée, le tuyau de vidange (11) étant fixé par sa première extrémité (13) au réservoir (9) d'eaux usées et étant prévu pour être relié, par sa deuxième extrémité (15), à un panneau de service (17) dans la structure de l'aéronef, l'ensemble (7) formant réservoir d'eaux usées comprenant un dispositif (23) de compensation de tolérances selon la revendication 1.

3. Ensemble (7) formant réservoir d'eaux usées selon la revendication 2, dans lequel la première pièce tubulaire (25) est mobile de manière bidimensionnelle par rapport à la deuxième pièce tubulaire (27) dans un plan perpendiculaire à l'axe longitudinal (29).

4. Ensemble (7) formant réservoir d'eaux usées selon la revendication 2 ou la revendication 3, dans lequel la première pièce tubulaire (25) est adaptée de façon à être reliée au panneau de service (17) et dans lequel la deuxième pièce tubulaire (27) est reliée à la deuxième extrémité (15) du tuyau de vidange (11).

5. Ensemble (7) formant réservoir d'eaux usées selon l'une des revendications 2 à 4, dans lequel la deuxième pièce tubulaire (27) est formée d'un matériau en caoutchouc.

6. Aéronef (1) comprenant un ensemble (7) formant réservoir d'eaux usées selon l'une des revendications 2 à 5 ou comprenant un dispositif (23) de compensation de tolérances selon la revendication 1.
